# EUROPEAN PATENT SPECIFICATION

(11) **EP 3 050 730 B1**
(45) Date of publication and mention of the grant of the patent: **01.11.2017**
(21) Application number: 16153273.4
(22) Date of filing: 29.01.2016
(51) Int. Cl.: B60J 10/24, B60J 10/25, B60J 10/26, B60J 10/78, B60J 10/77, B60J 10/84

(54) **WEATHER STRIP**
DICHTUNGSSTREIFEN
BANDE D'ÉTANCHÉITÉ

(30) Priority: 02.02.2015 JP 2015018822
(43) Date of publication of application: 03.08.2016
(73) Proprietor: Nishikawa Rubber Co., Ltd., Hiroshima-shi, Hiroshima-ken (JP); HONDA MOTOR CO., LTD., Tokyo, 107-8556 (JP)
(72) Inventor: Matsuura, Toshifumi, Hiroshima (JP); Suesada, Ryo, Saitama, 351-0193 (JP); Soda, Masaki, Saitama, 351-0193 (JP); Ishikawa, Takeshi, Saitama, 351-0193 (JP)
(74) Representative: Scholz, Volker

(56) References cited:
- EP-A2- 2 468 551
- DE-C1- 3 236 202
- JP-A- H07 186 731
- JP-A- S63 235 143

## Description

### BACKGROUND INFORMATION

The present invention relates to weather strips operatively coupled on front pillars of retractable roof vehicles or sashless door vehicles, which directly make elastic contact with top ends and inner-cabin side surfaces of door glasses or gussets to seal outside and inside of vehicles. The retractable roof vehicles include convertible vehicles. The sashless door vehicles include hard top vehicles of which roofs do not open or close.

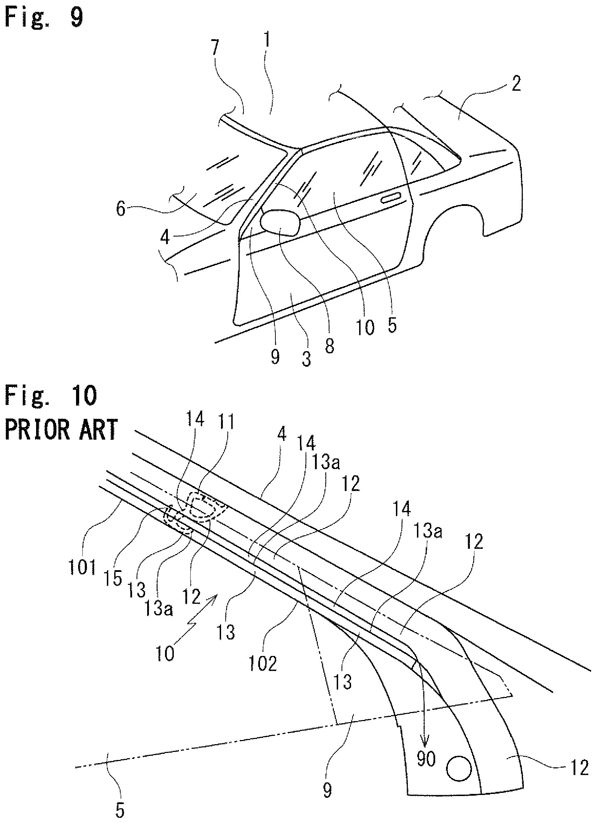

Fig. 9 is an external view of one type of retractable roof vehicles of which roofs that open and close are folded to open. The roof comprises a soft top 1 which is folded and put away in a trunk 2 on a lower rear side of a vehicle. Another roof of the retractable roof vehicle comprises a roof panel and a back window panel at the back of the roof panel instead of the soft top 1, which are folded and put away in the trunk 2 while the roof panel as folded is piled on the back window panel. Such vehicles are generally called retractable hard top, coupe cabriolet or coupe convertible.

In the retractable roof vehicle, a weather strip 10 is operatively coupled on side edges of a front pillar 4 as an opening edge of a door 3 via tape (not shown) (alternatively, the weather strip 10 may also be fit in holders including retainers). The weather strip 10 makes elastic contact with a door glass (side glass) 5, that lifts or lowers when the door 3 is in a closed position, to seal outside and inside of the vehicle.

As shown in Fig. 10 to Fig. 12(b), on a lower side of the front pillar 4, the weather strip 10 is prepared by connecting a die molded part 102 to a lower side of an extrusion molded part 101. When the door 3 is in the closed position, a gusset 9 with a door mirror 8 makes elastic contact with the die molded part 102, and the door glass 5 makes elastic contact with the extrusion molded part 101 as well as a boundary between the extrusion molded part 101 and the die molded part 102. In case the door 3 does not include the gusset 9, the door glass 5 makes elastic contact with the die molded part 102.

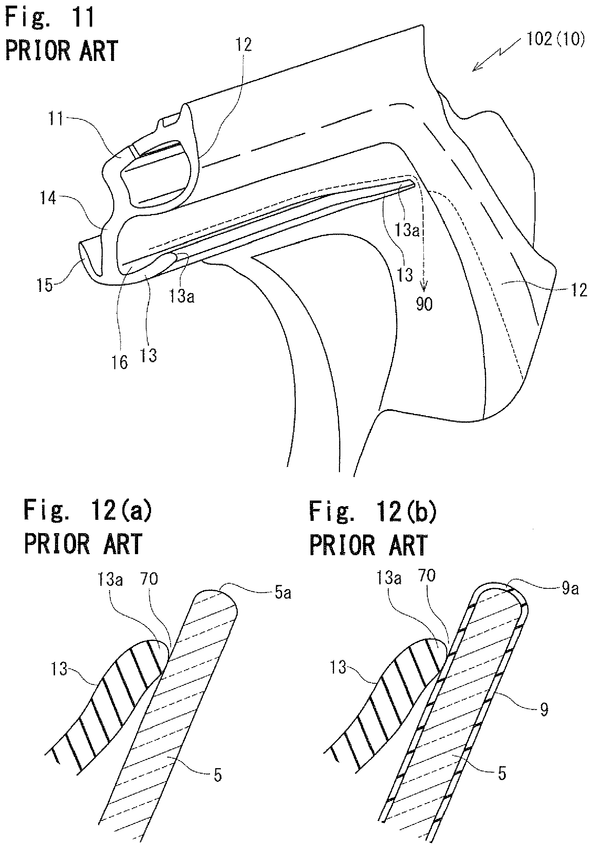

The weather strip 10 includes: an installation base member 11 having the tape adhered thereon; a hollow seal part 12 integrally molded with the installation base member 11, which makes elastic contact with a top end 5a of the door glass 5 and a top end 9a of the gusset 9 when the door 3 is in the closed position; a side wall 14 which extends downward from the hollow seal part 12; and a seal lip 13 which extends diagonally upward toward an outer-cabin side from an outer-cabin side of the side wall 14, of which top end 13a makes elastic contact with an inner-cabin side surface of the door glass 5 (Fig. 12(a)) and an inner-cabin side surface of the gusset 9 (Fig. 12(b)) in the same manner as the hollow seal part 12. The top end 13a of the seal lip 13 curves upward when in elastic contact with the inner-cabin side surface of the door glass 5, thereby forming an eaves-trough-shaped water receiving part 16 on a side of a base root of the seal lip 13.

The side wall 14 has a lip 15 on the inner-cabin side thereof which abuts interior material (not shown) including garnish.

Various weather strips have been disclosed, of which hollow seal parts and seal lips make elastic contact respectively with the top ends and the inner-cabin side surfaces of the door glasses that lift or lower, thereby doubly-sealing the door glass from the upper side and the lower side (see the Japanese unexamined Patent Publications No. H07-205662 and 2012-131396).

As shown in Fig. 12(a) and Fig. 12(b), the top end 13a of the seal lip 13 has a circular shaped cross section for securing sealing pressure between the top end 13a and the surface of the door glass 5 and between the top end 13a and the surface of the gusset 9, when in elastic contact with each other, thereby concentrating the sealing pressure. More specifically, the seal lip 13 is subjected to abutment and separation repeatedly, and every time the seal lip 13 abuts on the door glass 5 and the gusset 9, an angle of the seal lip 13 may vary with respect to the door glass 5 and the gusset 9. Even under the condition, the seal lip 13 having the circular shaped cross section stabilizes a condition of abutment and secures the sealing pressure.

As the seal lip 13 makes elastic contact with the door glass 5 and the gusset 9 when the door 3 is in the closed position, a triangular space 70 is formed between the top end 13a and the door glass 5 and between the top end 13a and the gusset 9.

Accordingly, water 90 crosses the door glass 5 and the gusset 9, and enters an inner-cabin side (vehicle interior) while opening or closing the door 3 or lifting or lowering the door glass 5. The water 90 drops along surfaces of the door glass 5 and the gusset 9, reaches the top end 13a of the seal lip 13, collects on the triangular space 70 and flows along the seal lip 13 which inclines downward.

As shown in Fig. 11, on the die molded part 102 of the weather strip 10 on the lower side of the front pillar 4, an end (front end) of the seal lip 13 which makes elastic contact with an inner-cabin side of the gusset 9 is cut off. Accordingly, the water 90 which flows along the seal lip 13 enters the inner-cabin side via a tip of the end of the seal lip 13.

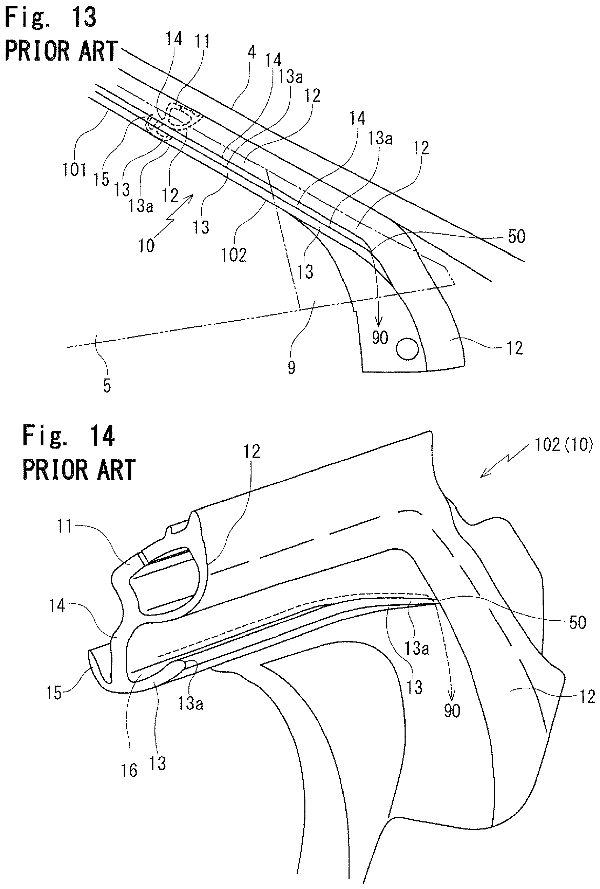

In this connection, as shown in Fig. 13 and Fig. 14, the end (front end) of the seal lip 13 may be connected to and unified with the hollow seal part 12 (connected part 50) so that a space is not formed between the hollow seal part 12 and the seal lip 13. Under the structure, however, the water 90 which collects on the triangular space 70 flows along the seal lip 13 but the water 90 has an escape cut off and, as shown in Fig. 14, enters the inner-cabin side.

The Japanese unexamined Patent Publication No. H07-205662 relates to a sealing structure of a corner part between the front pillar 4 and a header 7. The Japanese unexamined Patent Publication 2012-131396 discloses that a bead part is formed on a part of the hollow part 12, with which the top end 5a of the door glass 5 makes elastic contact. Accordingly, the Japanese unexamined Patent Publications do not relate to a drainage structure of the water 90 which collects on the triangular space 70 between the top end 13a of the seal lip 13 and the inner-cabin side surfaces of the door glass 5 and the gusset 9.

Accordingly, an object of the present invention is to provide the weather strips on the lower sides of the front pillars which prevent entrance of water into the inner-cabin side by draining water without fail. The water flows along the top ends of the seal lips in elastic contact with the inner-cabin side surfaces of the door glasses and the gussets.

Expressions "front and rear" and "upper and lower" in the specification correspond to "front and rear" sides and "upper and lower" sides of the vehicles, respectively.

### SUMMARY

In order to achieve the above-mentioned object, according to one aspect of the invention, a weather strip is provided, the weather strip including: an installation base member (11) operatively coupled along a front pillar (4) of a vehicle; a hollow seal part (12) which is formed on the installation base member (11) and which makes elastic contact with a top end (5a) of a door glass (5) or a top end (9a) of a gusset (9) when a door (3) is in a closed position; a side wall (14) which extends downward from the hollow seal part (12); and a seal lip (13) which extends diagonally upward toward an outer-cabin side from an outer-cabin side of the side wall (14), a top end (13a) of the seal lip (13) making elastic contact with an inner-cabin side surface of the door glass (5) or an inner-cabin side surface of the gusset (9), characterized in that:
on a lower side of said front pillar (4), said seal lip (13) inclines downward in a longitudinal direction of said weather strip (10) and an end of the seal lip (13) is unified with said hollow seal part (12) which curves and descends at an angle larger than the seal lip (13);
a weir (20) with a receiving surface (21) protrudes on a part of an upper surface of the seal lip (13) before reaching a connected part (50) on which the seal lip (13) is unified with the hollow seal part (12), the weir (20) extending from an outer-cabin side end (13h) of said seal lip (13) toward an inner-cabin side;
a drainage hole (40) is formed on a position of the connected part (50), the drainage hole (40) connecting with an inside of said hollow seal part (12); and
a bead part (30) extends from an inner-cabin side of said weir (20) toward a side of a base root of said seal lip (13) for guiding water (90) received by said weir (20) to said drainage hole (40).

In addition, according to an aspect of the present invention, said bead part (30) extends in a manner to descend from the inner-cabin side of said weir (20) toward said drainage hole (40).

In addition, according to an aspect of the present invention, the top end (13a) of said seal lip (13) is gradually transformed in cross sectional shape from a circular shaped cross section on an upper side to an acute angled cross section toward a side of said weir (20) on a lower side, and the top end (13a) of the seal lip (13) forms the acutest angled cross section on said weir (20).

In addition, according to an aspect of the present invention, said seal lip (13) makes elastic contact with said glass (5) or the gusset (9) in a manner that, on said weir, an angle (*θ*1, *θ*2) is an obtuse angle between an upper surface (13u) of the top end (13a) of the seal lip (13) and a surface of said glass (5) or a surface of the gusset (9).

In addition, according to an aspect of the present invention, a plurality of said weirs (20) are formed in a longitudinal direction in which said seal lip (13) extends in the manner to descend.

Symbols in parentheses show constituents or items corresponding to the drawings.

According to the present invention, on the lower side of said front pillar, the seal lip of the weather strip inclines downward and the end of the seal lip extends to the hollow seal part which curves and descends at the angle larger than the seal lip. That is, the end of the seal lip is not cut off as shown in Fig. 11. The structure forms a doubly-sealing structure of the gusset (the door glass, when without gusset) by the hollow seal part and the seal lip when the door is in the closed position. Also, the structure prevents the water which collects between the gusset (or the door glass) and the top end of the seal lip from entering the inner-cabin side (vehicle interior) via a tip of the end of the seal lip.

The drainage hole is formed on the position on which the seal lip is unified with the hollow seal part. The drainage hole connects with the inside of the hollow seal part. The weir protrudes on the position before reaching the connected part. The bead part extends from the weir toward the side of the base root of the seal lip. Accordingly, the water which collects between the gusset (or the door glass) and the top end of the seal lip does not have an escape cut off or overflow as in the prior art (Fig. 14). In other words, the water which collects between the gusset (or the door glass) and the top end of the seal lip flows along the seal lip, is received by the weir, is guided to the side of the base root of the seal lip via the bead part, and is guided to the drainage hole without fail along the seal lip which inclines downward. The water guided to the drainage hole is drained outside through the hollow seal part.

The structure prevents the water which collects between the gusset (or the door glass) and the top end of the seal lip from entering the inner-cabin side.

In addition, the bead part is provided from the inner-cabin side of the weir toward the side of the base root of the seal lip and extends in the manner to descend toward the drainage hole. The structure drains the water more smoothly.

In addition, the top end of the seal lip is gradually transformed in cross sectional shape. Specifically, the top end of the seal lip has the circular shaped cross section for securing surface pressure at a time of sealing. As the top end of the seal lip approaches the weir on the lower side, the top end of the seal lip is gradually transformed to the acute angled cross section, and forms the acutest angled cross section on the weir. Accordingly, the structure sweeps out the water which collects between the gusset (or the door glass) and the top end of the seal lip and prevents the water from collecting.

In addition, the seal lip makes elastic contact with the gusset (or the door glass) in a manner that, on the weir, the angle is the obtuse angle between the upper surface of the top end of the seal lip and the surface of the gusset (or the door glass). Accordingly, a triangular space is not formed on which the water collects. The water received by the weir is inevitably guided toward the side of the base root of the seal lip.

In addition, the plurality of the weirs are formed in the longitudinal direction in which the seal lip extends in the manner to descend. The structure increases the surface pressure of the seal lip which makes elastic contact with the inner-cabin side surface of the door glass or the inner-cabin side surface of the gusset.

### BRIEF DESCRIPTION OF THE DRAWINGS

Fig. 1 is an enlarged side view showing a state that a weather strip according to an embodiment of the present invention is operatively coupled on a front pillar;
Fig. 2 is an enlarged perspective view of a die molded part of the weather strip of Fig. 1;
Fig. 3 is an enlarged perspective view around a weir of the weather strip of Fig. 2;
Fig. 4 is an enlarged side view of the weir of the weather strip of Fig. 3;
Fig. 5(a), Fig. 5(b) are enlarged side views of the weir of the weather strip of Fig. 3 according to other embodiments: Fig. 5(a) illustrates the weir thick in thickness; Fig. 5(b) illustrates three weirs formed on a seal lip;
Fig. 6(a), Fig. 6(b), Fig. 6(c) illustrate a state that a seal lip of the weather strip of Fig. 2 makes elastic contact with a gusset: Fig. 6(a) is an I-I line enlarged cross section; Fig. 6(b) is a II-II line enlarged cross section; Fig. 6(c) is a III-III line enlarged cross section;
Fig. 7(a), Fig. 7(b) are IV -IV line enlarged cross sections of Fig. 2, which illustrate bending of the weather strip on a boundary between a door glass and the gusset: Fig. 7(a) illustrates a state before making elastic contact; Fig. 7(b) illustrates a state in elastic contact;
Fig. 8(a), Fig. 8(b), Fig. 8(c) illustrates a state that a seal lip of another weather strip according to the embodiment of the present invention makes elastic contact with a door glass: Fig. 8(a) corresponds to an I-I line enlarged cross section of Fig. 2; Fig. 8(b) corresponds to a II-II line enlarged cross section of Fig. 2; Fig. 8(c) corresponds to a III-III line enlarged cross section of Fig. 2;
Fig. 9 is an external perspective view of a retractable roof vehicle;
Fig. 10 is an enlarged side view showing a state that a weather strip according to a prior art is operatively coupled on a front pillar;
Fig. 11 is an enlarged perspective view of a die molded part of the weather strip of Fig. 10;
Fig. 12(a), Fig. 12(b) are cross sections of a state that a seal lip of the weather strip of Fig. 10 makes elastic contact: in Fig. 12(a), the seal lip makes elastic contact with a door glass; in Fig. 12(b), the seal lip makes elastic contact with a gusset;
Fig. 13 is an enlarged side view showing a state that another weather strip according to a prior art is operatively coupled on a front pillar; and
Fig. 14 is an enlarged perspective view of a die molded part of the weather strip of Fig. 13.

### DETAILED DESCRIPTION

Referring to the Drawings, a weather strip according to an embodiment of the present invention will be described. When constituents or items correspond to those in prior arts, the same symbols are used.

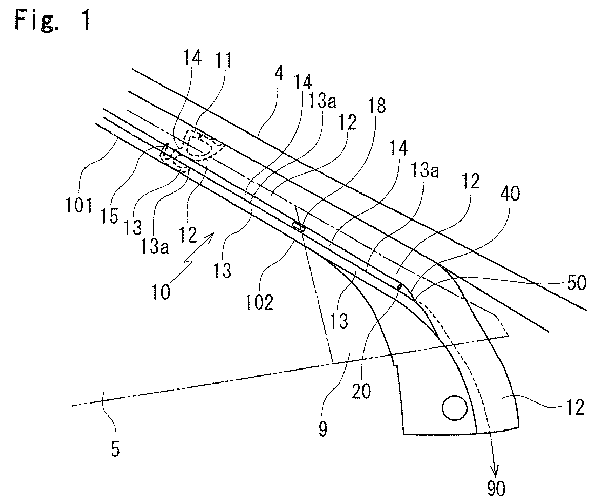

As shown in Fig. 9, the weather strip according to an embodiment of the present invention is operatively coupled on a front pillar 4 of a vehicle of which a soft top 1 that opens or closes is folded and put away in a trunk 2. As shown in Fig. 1 to Fig. 4, a die molded part 102 of the weather strip 10 has a weir 20, a bead part 30 and a drainage hole 40 formed thereon.

The weather strip 10 is operatively coupled along a front pillar 4 as an opening edge of a door 3 via tape (not shown) (alternatively, the weather strip 10 may be fit in holders including retainers). The weather strip 10 makes elastic contact with a door glass (side glass) 5 that lifts or lowers and a gusset 9, when the door 3 is in a closed position, to seal outside and inside of the vehicle.

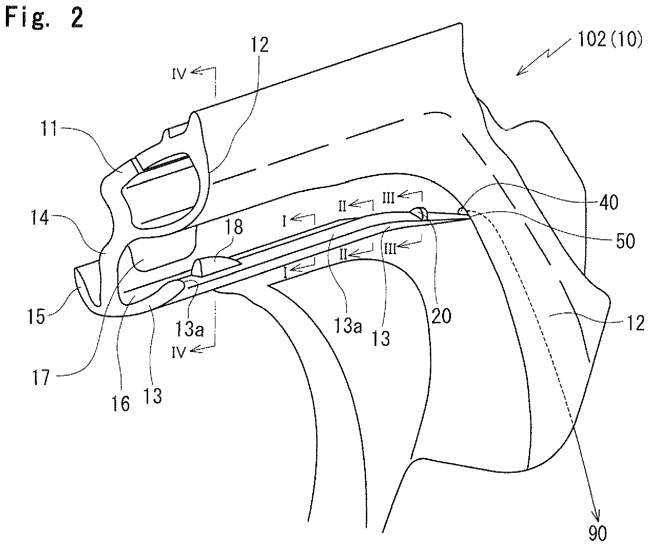

As shown in Fig. 1 and Fig. 2, on a lower side of the front pillar 4, the weather strip 10 is prepared by connecting the die molded part 102 to a lower side of an extrusion molded part 101. When the door 3 is in the closed position, the gusset 9 having a door mirror 8 operatively coupled on a surface on an outer-cabin side thereof makes elastic contact with the die molded part 102, and the door glass 5 makes elastic contact with the extrusion molded part 101 as well as a boundary between the extrusion molded part 101 and the die molded part 102. A die molded part connected to the upper side of the extrusion molded part 101 is connected to an end of a header weather strip (not shown) operatively coupled on a header 7 which fixes an upper end of a front glass 6.

As shown in Fig. 1 and Fig. 2, the weather strip 10 includes: an installation base member 11 operatively coupled on the opening edge of the door 3; a hollow seal part 12 which faces downward on an outer-cabin side with respect to the installation base member 11; a side wall 14 which extends downward from the hollow seal part 12; a seal lip 13 which extends diagonally upward toward an outer-cabin side from an outer-cabin side of a lower part of the side wall 14; and a seal lip 15 which extends diagonally upward toward an inner-cabin side from an inner-cabin side of the lower part of the side wall 14. The seal lip 15 abuts interior material (not shown) including garnish.

As shown in Fig. 2, on the die molded part 102, the installation base member 11 has a part thereof split for inserting a core (not shown) for die molding. On the extrusion molded part 101, the installation base member 11 is connected. When the door 3 is in the closed position, a doubly-sealing structure is formed that: the hollow seal part 12 makes elastic contact with a top end 9a of the gusset 9; and a top end 13a of the seal lip 13 makes elastic contact with an inner-cabin side surface of the gusset 9. On the extrusion molded part 101, when the door 3 is in the closed position, the hollow seal part 12 makes elastic contact with a top end 5a of the door glass 5 and the top end 13a of the seal lip 13 makes elastic contact with an inner-cabin side surface of the door glass 5.

The top end 13a of the seal lip 13 curves upward and makes elastic contact with the inner-cabin side surface of the door glass 5 and the inner-cabin side surface of the gusset 9, thereby forming an eaves-trough-shaped water receiving part 16 on a side of a base root of the seal lip 13.

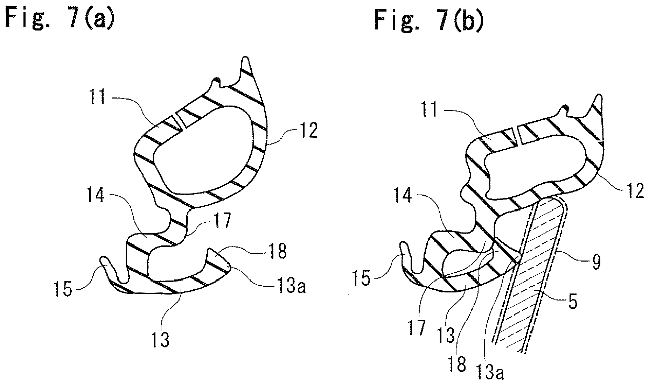

A front side of the door glass 5 is inserted into the gusset 9 and difference in level appears on a boundary between the door glass 5 and the gusset 9. On a position (IV-IV line enlarged cross sections of Fig. 2) of elastic contact between the boundary and the hollow seal part 12 as well as the seal lip 13, as shown in Fig. 7(a), a convex 17 and a protrusion 18 are formed. The convex 17 is formed by curving the side wall 14 toward the outer-cabin side. The protrusion 18 is formed on an upper surface side of the top end 13a of the seal lip 13. When the door 3 is in the closed position as shown in Fig. 7(b), the protrusion 18 on the top end 13a of the seal lip 13 collides with the convex 17 on the side wall 14.

According to the structure, sealing pressure on the boundary between the door glass 5 and the gusset 9 is higher than sealing pressure on at least one other part. The sealing pressure fills up a space on the boundary between the door glass 5 and the gusset 9 for preventing entrance of water 90 into the inner-cabin side. Alternatively, inserting a pad into the space on the boundary between the door glass 5 and the gusset 9 and fixing the pad can substitute for forming the convex 17 on the side wall 14 and the protrusion 18 on the seal lip 13. But the structure necessitates an extra operation of inserting and fixing the pad, is complicated and may cause the pad to shift from a fixed position.

On the lower side of the front pillar 4, the hollow seal part 12 and the seal lip 13 incline downward along the front pillar 4 in a longitudinal direction of the weather strip 10 (direction in which the weather strip extends long at right angles with respect to a cross sectional shape (in Fig. 1, a direction from an upper left to diagonally lower right with respect to a sheet)). The hollow seal part 12 begins to curve and descend at an angle larger than the seal lip 13 halfway. The seal lip 13 linearly extends substantially in parallel with the front pillar 4. Accordingly, an end on a front side of the seal lip 13 abuts and connects with the hollow seal part 12 for unification. In other words, the end of the seal lip 13 disappears when unified with the hollow seal part 12.

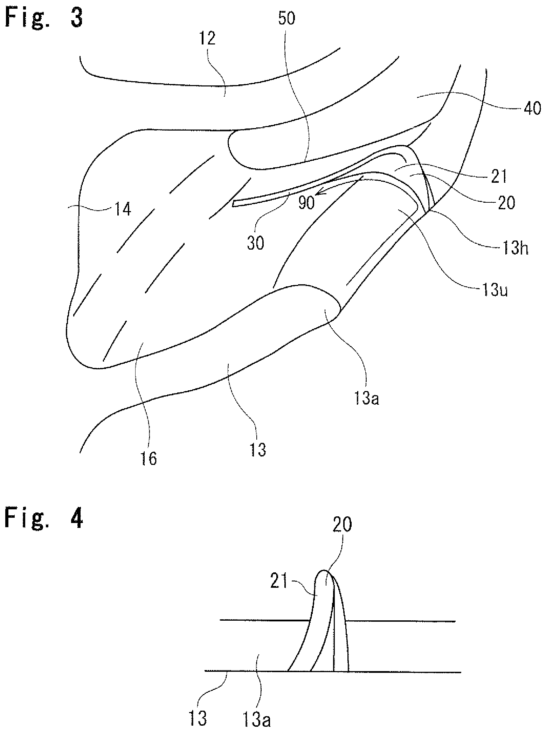

A drainage hole 40 is formed on a connected part 50 on which the seal lip 13 is unified with the hollow seal part 12. The drainage hole 40 connects with the hollow seal part 12. As shown in Fig. 3, the drainage hole 40 is formed on a position on which an upper surface of the seal lip 13 abuts the hollow seal part 12. The drainage hole 40 extends wide from the top end 13a of the seal lip 13 to the side wall 14. Since the seal lip 13 inclines downward, the water 90 which flows on a water receiving part 16 is guided to the drainage hole 40 without fail.

The weir 20 with a receiving surface 21 protrudes on a part of an upper surface of the seal lip 13 before reaching the connected part 50 on which the seal lip 13 is unified with the hollow seal part 12. The weir 20 extends from an outer-cabin side end 13h of the seal lip 13 toward an inner-cabin side. The receiving surface 21 is formed on an upper surface 13u of the top end 13a of the seal lip 13. As shown in Fig. 4, the receiving surface 21 curves upstream (in Fig. 4, left side relative to the sheet). More specifically, the receiving surface 21 concavely curves with respect to the water 90 which flows along the top end 13a of the seal lip 13. Accordingly, the weir 20 receives the water 90 without fail and the receiving surface 21 prevents the water 90 from climbing over the weir 20.

The receiving surface 21 may be formed from the top end 13a of the seal lip 13 toward a side of a base root, in other words, in a direction at right angles to a longitudinal direction in which the seal lip 13 descends. In the present embodiment, the receiving surface 21 is formed by slightly lowering an inner-cabin side of the seal lip 13 with respect to the outer-cabin side end 13h of the seal lip 13. The structure shortens time for the water 90 received by the receiving surface 21 to collect on the receiving surface 21 and quickly guides the water 90 to the water receiving part 16 on the inner-cabin side of the seal lip 13.

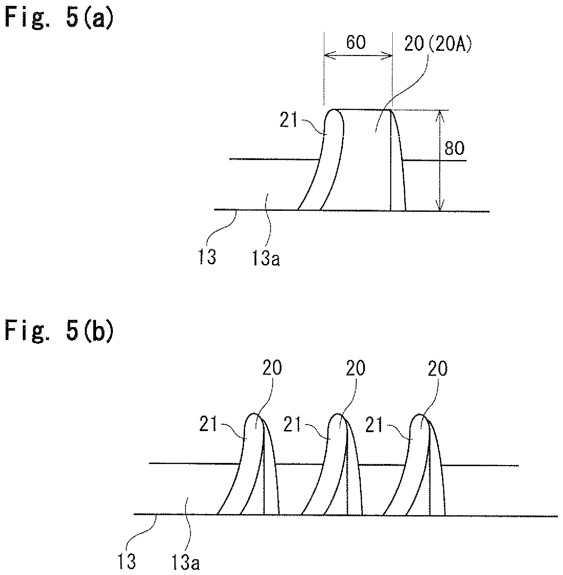

As shown in Fig. 3, the receiving surface 21 has a shape of a part of a fan in accordance with the top end 13a of the seal lip 13 but the shape is not limited. Also, shape of the weir 20 as a whole may vary in height or thickness (width). As shown in Fig. 5(a), thickness 60 may be a half of height 80, or as shown in Fig. 5(b), a plurality of the weirs 20, three in the present embodiment, may be provided at intervals from each other in the longitudinal direction in which the seal lip extends in a manner to descend.

The bead part 30 is provided on the inner-cabin side of the weir 20. The bead part 30 extends from the inner-cabin side of the weir 20 toward the side of the base root of the seal lip 13 for guiding the water 90 received by the weir 20 to the drainage hole 40. In addition, the bead part 30 extends in a manner to descend toward the drainage hole 40 for draining the water 90 more smoothly.

The weir 20 and the bead part 30 of the present embodiment are made of rubber-like elastic body and die molded simultaneously with the weather strip 10. But, the weir 20 and the bead part 30 may be molded separately from the weather strip 10 and adhered on the weather strip 10 after molding. In this case, the weir 20 and the bead part 30 are not necessarily made of rubber-like elastic body.

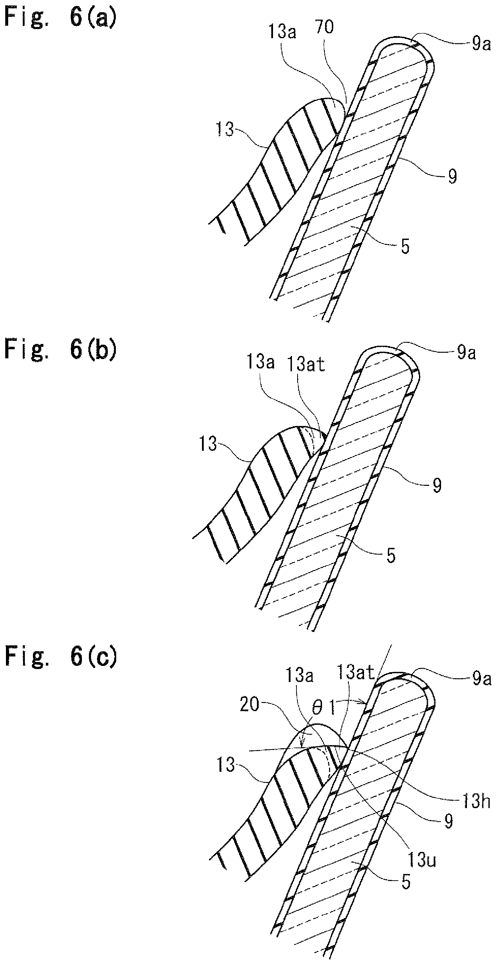

The top end 13a of the seal lip 13 may stably have a circular shaped cross section from an upper side to a lower side of the weather strip 10 as shown in Fig. 6(a) for securing surface pressure at the time of elastic contact. In this case also, the water 90 which collects on a triangular space 70 between the top end 13a and the gusset 9 is received the weir 20, flows along the bead part 30 and is guided to the drainage hole 40 via the water receiving part 16. In the present embodiment, as the top end 13a of the seal lip 13 approaches the weir 20 on the lower side from the upper side, the top end 13a of the seal lip 13 is gradually transformed from the circular shaped cross section to an acute angled cross section as shown in Fig. 6(b), and forms the acutest angled cross section on the weir 20 as shown in Fig. 6(c).

According to the structure, as the top end 13a of the seal lip 13 is transformed from the circular shaped cross section to the acute angled cross section, the water 90 which collects between the gusset 9 and the top end 13a of the seal lip 13 is swept out. The structure prevents the water 90 from staying on the triangular space 70 between the top end 13a and the gusset 9.

In other words, the cross sectional shape of the top end 13a of the seal lip 13 is continuously circular, not transformed, and a fin-shaped cross section 13at is added to the outer-cabin side surface of the top end 13a having the circular shaped cross section. The fin-shaped cross section 13at extends toward the outer-cabin side. As the fin-shaped cross section 13at approaches the weir, the fin-shaped cross section 13at forms an acute angle. The fin-shaped cross section 13at is added from a slightly upper side with respect to the weir 20. In the present embodiment, the fin-shaped cross section 13at extends to a lower side with respect to the weir 20 and is smoothly unified with the top end 13a of the seal lip 13 having the circular shaped cross section.

In Fig. 3, the top end 13a of the seal lip 13 curves in such a manner that an outer-cabin side edge of the top end 13a extends to a position closest to an outer-cabin side on the weir 20. But the top end 13a of the seal lip 13 may be linear, not curved.

The seal lip 13 makes elastic contact with the gusset 9 in a manner that, on the weir 20, as shown in Fig. 6(c), an angle *θ* 1 is the obtuse angle between an upper surface 13u of the top end 13a of the seal lip 13 and the surface of the gusset 9. Accordingly, the water 90 received by the weir 20 is inevitably guided toward the side of the base root of the seal lip 13.

According to the above-structured weather strip of the embodiment, on the lower side of said front pillar 4, the seal lip 13 of the weather strip 10 inclines downward and the end of the seal lip 13 extends to the hollow seal part 12 which curves and descends at an angle larger than the seal lip 13. That is, the end of the seal lip 13 is not cut off. The structure forms a sufficient doubly-sealing structure of the gusset 9 by the hollow seal part 12 and the seal lip 13 when the door 3 is in a closed position. Also, the structure prevents the water 90 which collects between the gusset 9 and the top end 13a of the seal lip 13 from entering the inner-cabin side via a tip of the end of the seal lip 13.

The drainage hole 40 is formed on the position on which the seal lip 13 is unified with the hollow seal part 12. The drainage hole 40 connects with the inside of the hollow seal part 12. The weir 20 protrudes on the position before reaching the connected part on which the seal lip 13 is unified with the hollow seal part 12. The bead part 30 extends from the weir 20 toward the side of the base root of the seal lip 13. Accordingly, the water 90 which collects between the gusset 9 and the top end 13a of the seal lip 13 is received by the weir 20, is guided to the water receiving part 16 on the side of the base root of the seal lip 13 via the bead part 30, is guided to the drainage hole 40 without fail along the seal lip 13 which inclines downward. The water 90 guided to the drainage hole 40 is drained outside through the hollow seal part 12.

The structure prevents the water 90 which collects between the gusset 9 and the top end 13a of the seal lip 13 from entering the inner-cabin side.

The present embodiment specifies an examples that: the gusset 9 is operatively coupled on a front side of the door 3; and on the lower side of the front pillar 4, when the door 3 is in the closed position, the hollow seal part 12 and the seal lip 13 of the die molded part 102 of the weather strip 10 makes elastic contact with the gusset 9. But the present invention is also applicable to vehicles: which do not have the gusset 9 operatively coupled on the front side of the door 3; and on the lower side of the front pillar 4, when the door 3 is in the closed position, the hollow seal part 12 and the seal lip 13 of the die molded part 102 of the weather strip 10 makes elastic contact with the door glass 5.

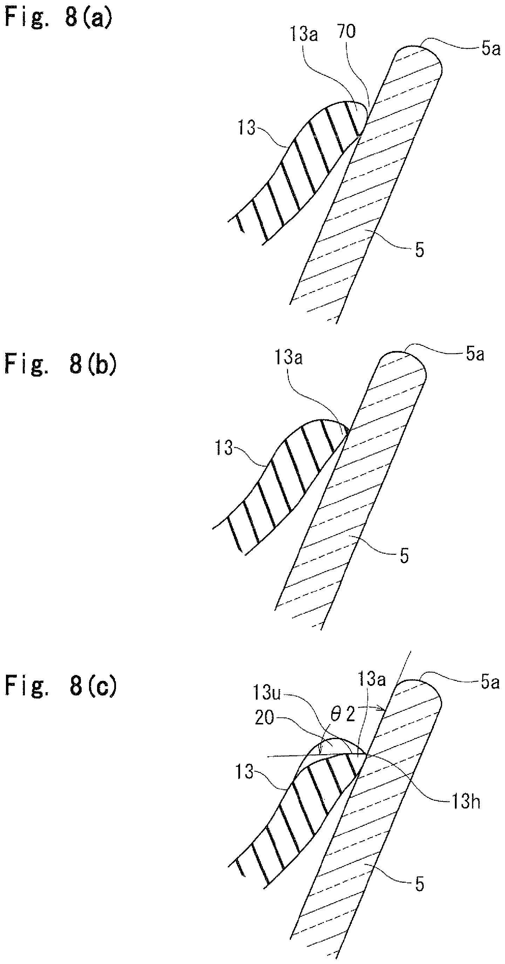

Fig. 8(a), Fig. 8(b), Fig. 8(c) illustrates a state that the top end 13a of the seal lip 13 makes elastic contact with the door glass 5. In the same manner as Fig. 6(a), Fig. 6(b), Fig. 6(c), as the top end 13a of the seal lip 13 approaches the weir 20 on the lower side from the upper side, the top end 13a of the seal lip 13 is gradually transformed from the circular shaped cross section (Fig. 8(a)) to the acute angled cross section (Fig. 8(b)), and forms the acutest angled cross section on the weir 20 (Fig. 8(c)). The seal lip 13 makes elastic contact with the door glass 5 in a manner that, on the weir 20, as shown in Fig. 8(c), an angle *θ* 2 is the obtuse angle between an upper surface 13u of the top end 13a of the seal lip 13 and the surface of the door glass 5.

In case the gusset 9 is operatively coupled on the front side of the door 3, difference in level appears between the door glass 5 and the gusset 9. In order to cover the difference in level, as shown in Fig. 2, Fig. 7(a) and Fig. 7(b), the protrusion 18 on the top end 13a of the seal lip 13 collides with the convex 17 on the side wall 14. In case the gusset 9 is not operatively coupled on the front side of the door 3, the protrusion 18 and the convex 17 may be omitted.

In the present embodiment, the weather strip is adopted on the retractable roof vehicle of the soft top roof. But the weather strip of the present invention is also applicable to: roofs of roof panels and a back window panels at the back of the roof panels, which are folded and put away in the trunk 2 while the roof panels as folded are piled on the back window panels; and removal roofs including targa tops.

The present invention is not necessarily adopted only on the vehicles with roofs which open or close. The present invention is also applicable to sashless door vehicles including hard top vehicles with roofs which do not open or close as well as the door glass which directly make elastic contact with the weather strip on body sides.

## Claims

1. A weather strip comprising: an installation base member (11) operatively coupled along a front pillar (14) of a vehicle; a hollow seal part (12) which is formed on the installation base member and which makes elastic contact with a top end (5a) of a door glass (5) or a top end (9a) of a gusset (9) when a door (3) is in a closed position; a side wall (14) which extends downward from the hollow seal part; and a seal lip (13) which extends diagonally upward toward an outer-cabin side from an outer-cabin side of the side wall, a top end (13a) of the seal lip making elastic contact with an inner-cabin side surface of the door glass or an inner-cabin side surface of the gusset, **characterized in that**:
on a lower side of said front pillar, said seal lip inclines downward in a longitudinal direction of said weather strip and an end of the seal lip is unified with said hollow seal part which curves and descends at an angle larger than the seal lip;
a weir (20) with a receiving surface (21) protrudes on a part of an upper surface of the seal lip before reaching a connected part (50) on which the seal lip is unified with the hollow seal part, the weir extending from an outer-cabin side end (13h) of said seal lip toward an inner-cabin side;
a drainage hole (40) is formed on a position of the connected part, the drainage hole connecting with an inside of said hollow seal part; and
a bead part (30) extends from an inner-cabin side of said weir toward a side of a base root of said seal lip for guiding water (90) received by said weir to said drainage hole.

2. The weather strip as claimed in Claim 1, wherein: said bead part (30) extends in a manner to descend from the inner-cabin side of said weir (20) toward said drainage hole (40).

3. The weather strip as claimed in Claim 1 or Claim 2, wherein: the top end (13a) of said seal lip (13) is gradually transformed in cross sectional shape from a circular shaped cross section on an upper side to an acute angled cross section toward a side of said weir (20) on a lower side, and the top end (13a) of said seal lip forms the acutest angled cross section on said weir.

4. The weather strip as claimed in Claim 3, wherein: said seal lip (13) makes elastic contact with said glass (5) or the gusset (9) in a manner that, on said weir (20), an angle (θ1,θ2) is an obtuse angle between an upper surface (13u) of the top end (13a) of the seal lip (13) and a surface of said glass or a surface of the gusset.

5. The weather strip as claimed in any one of Claim 1 to Claim 4. wherein: a plurality of said weirs (20) are formed in a longitudinal direction in which said seal lip (13) extends in the manner to descend.

## Patentansprüche

1. Dichtungsstreifen, umfassend: ein Installationsbasisglied (11), das entlang einer A-Säule (14) eines Fahrzeugs operativ gekoppelt ist; ein Hohldichtungsteil (12), das am Installationsbasisglied gebildet wird und das einen elastischen Kontakt mit einem oberen Ende (5a) einer Türglasscheibe (5) oder einem oberen Ende (9a) eines Winkelstücks (9) herstellt, wenn eine Tür (3) in einer geschlossenen Position ist; eine Seitenwand (14), die sich von dem Hohldichtungsteil aus nach unten erstreckt; und eine Dichtlippe (13), die sich von einer zum Fahrzeugäußeren zeigenden Seite der Seitenwand aus diagonal nach oben in Richtung einer zum Fahrzeugäußeren zeigenden Seite erstreckt, wobei ein oberes Ende (13a) der Dichtlippe einen elastischen Kontakt mit einer zum Fahrzeuginneren zeigenden Fläche der Türglasscheibe oder einer zum Fahrzeuginneren zeigenden Fläche des Winkelstücks herstellt, **dadurch gekennzeichnet, dass**:
an einer unteren Seite der A-Säule die Dichtlippe sich in einer Längsrichtung des Dichtungsstreifens nach unten neigt und ein Ende der Dichtlippe mit dem Hohldichtungsteil vereint ist, der sich krümmt und in einem größeren Winkel als die Dichtlippe nach unten führt;
ein Wehr (20) mit einer aufnehmenden Fläche (21) an einem Teil einer oberen Fläche der Dichtlippe vor Erreichen eines verbundenen Teils (50), an dem die Dichtlippe mit dem Hohldichtungsteil vereint wird, hervorsteht, wobei sich das Wehr von einem zum Fahrzeugäußeren zeigenden Ende (13h) der Dichtlippe in Richtung einer zum Fahrzeuginneren zeigenden Seite erstreckt;
eine Abflussöffnung (40) an einer Position des verbundenen Teils gebildet wird, wobei die Abflussöffnung mit einem Inneren des Hohldichtungsteils verbunden ist; und
ein Wulstteil (30) sich von einer zum Fahrzeuginneren zeigenden Seite des Wehrs in Richtung einer Seite der Wurzel der Dichtlippe erstreckt, um Wasser (90), das vom Wehr aufgenommen wird, an die Abflussöffnung zu leiten.

2. Dichtungsstreifen gemäß Anspruch 1, wobei: der Wulstteil (30) sich auf eine Weise erstreckt, dass er von der zum Fahrzeuginneren zeigenden Seite des Wehrs (20) in Richtung der Abflussöffnung (40) nach unten führt.

3. Dichtungsstreifen gemäß Anspruch 1 oder 2, wobei: das obere Ende (13a) der Dichtlippe (13) allmählich die Querschnittsform von einem kreisförmigen Querschnitt auf einer oberen Seite zu einem spitzwinkligen Querschnitt in Richtung einer Seite des Wehrs (20) auf einer unteren Seite ändert und das obere Ende (13a) der Dichtlippe am Wehr den spitzwinkligsten Querschnitt bildet.

4. Dichtungsstreifen gemäß Anspruch 3, wobei: die Dichtlippe (13) einen elastischen Kontakt mit der Glasscheibe (5) oder dem Winkelstück (9) auf solch eine Weise herstellt, dass am Wehr (20) ein Winkel (Θ1, Θ2) ein stumpfer Winkel zwischen einer oberen Fläche (13u) des oberen Endes (13a) der Dichtlippe (13) und einer Fläche der Glasscheibe oder einer Fläche des Winkelstücks ist.

5. Dichtungsstreifen gemäß einem der Ansprüche 1 bis 4, wobei: mehrere der genannten Wehre (20) in einer Längsrichtung gebildet werden, in der die Dichtlippe (13) sich so erstreckt, dass sie nach unten führt.

## Revendications

1. Joint d'étanchéité comprenant :
un élément de base de l'installation (11) couplé fonctionnellement le long d'un montant antérieur (14) d'un véhicule ;
une garniture d'étanchéité creuse (12) formée sur l'élément de base de l'installation, et effectuant un contact élastique avec une extrémité supérieure (5a) d'une vitre de portière (5) ou une extrémité supérieure (9a) d'un soufflet (9) lorsqu'une portière (3) se trouve dans sa position fermée ;
une paroi latérale (14) s'étendant vers le bas depuis la garniture d'étanchéité creuse ; et
une lèvre d'étanchéité (13) s'étendant diagonalement vers le haut, en direction d'un côté d'habitacle extérieur depuis un côté d'habitacle extérieur de la paroi latérale, une extrémité supérieure (13a) de la lèvre d'étanchéité effectuant un contact élastique avec une surface latérale d'habitacle intérieur ou une surface latérale d'habitacle intérieur du soufflet,
**caractérisé en ce que** :
sur un côté inférieur dudit montant antérieur, ladite lèvre d'étanchéité est inclinée vers le bas dans une direction longitudinale dudit joint d'étanchéité, et une extrémité de la lèvre d'étanchéité est unie à ladite garniture d'étanchéité creuse incurvée et descendant à un angle supérieur à la lèvre d'étanchéité ;
un épaulement (20) avec une surface réceptrice (21) faisant saillie sur une partie d'une surface supérieure de la lèvre d'étanchéité avant d'atteindre une partie connectée (50) sur laquelle la lèvre d'étanchéité s'unit avec la garniture d'étanchéité creuse, l'épaulement s'étendant d'une extrémité côté habitacle extérieur (13h) de ladite lèvre d'étanchéité en direction d'un côté habitacle intérieur ;
un orifice de drainage (40) étant formé sur un emplacement de la partie connectée, l'orifice de drainage se raccordant à un intérieur de ladite garniture d'étanchéité creuse ; et
une nervure (30) s'étendant du côté habitacle intérieur dudit épaulement vers un côté d'une racine de base de ladite lèvre d'étanchéité pour guider l'eau (90) reçue par ledit épaulement jusqu'audit orifice de drainage.

2. Joint d'étanchéité selon la revendication 1, dans lequel :
ladite nervure (30) s'étend de façon à descendre du côté habitacle intérieur dudit épaulement (20) vers ledit orifice de drainage (40).

3. Joint d'étanchéité selon la revendication 1 ou la revendication 2, dans lequel :
l'extrémité supérieure (13a) de ladite lèvre d'étanchéité (13) est transformée progressivement, dans sa forme en coupe transversale, d'une section transversale de forme circulaire sur un côté supérieur en une section transversale à angle aigu vers un côté dudit épaulement (20) sur un côté inférieur, et l'extrémité supérieure (13a) de ladite lèvre d'étanchéité formant la section transversale à l'angle le plus aigu sur ledit épaulement.

4. Joint d'étanchéité selon la revendication 3, ladite lèvre d'étanchéité (13) effectuant un contact élastique avec ladite vitre (5) ou le soufflet (9) de sorte que, sur ledit épaulement (20), un angle (θ1, θ2) soit un angle obtus entre une surface supérieure (13u) de l'extrémité supérieure (13a) de ladite lèvre d'étanchéité (13) et une surface de ladite vitre ou une surface du soufflet.

5. Joint d'étanchéité selon une quelconque des revendications 1 à 4, dans lequel :
une pluralité desdits épaulements (20) sont formés dans une direction longitudinale dans lequel ladite lèvre d'étanchéité (13) s'étend de façon à descendre.
